# EUROPÄISCHE PATENTSCHRIFT

(11) **EP 0 988 185 B1**
(45) Veröffentlichungstag und Bekanntmachung des Hinweises auf die Patenterteilung: **19.09.2001**
(21) Anmeldenummer: 98936140.7
(22) Anmeldetag: 09.06.1998
(51) Int. Cl.: B60R 21/22

(54) **SEITENAIRBAGMODUL**
SIDE AIRBAG MODULE
MODULE AIRBAG LATERAL

(30) Priorität: 12.06.1997 DE 19725559
(43) Veröffentlichungstag der Anmeldung: 29.03.2000
(73) Patentinhaber: Petri AG, 63743 Aschaffenburg (DE)
(72) Erfinder: PAUSCH, Tobias, D-13127 Berlin (DE); ALIABADI, Rasool, D-10827 Berlin (DE); STURM, Andreas, D-14089 Berlin (DE); WILS, Oliver, D-13467 Berlin (DE)
(74) Vertreter: Bärmann, Klaus, Dipl.-Ing.
(86) Internationale Anmeldenummer: DE9801593
(87) Internationale Veröffentlichungsnummer: WO9856622

(56) Entgegenhaltungen:
- DE-A- 2 016 761
- DE-U- 29 517 372
- DE-U- 29 517 951
- US-A- 3 756 620
- US-A- 5 482 318
- PATENT ABSTRACTS OF JAPAN vol. 017, no. 697 (M-1532), 20. Dezember 1993 & JP 05 238347 A (IKEDA BUSSAN CO LTD), 17. September 1993
- "SIDE IMPACT AIR BAG AND METHOD FOR FOLDING" RESEARCH DISCLOSURE, Nr. 385, 1. Mai 1996, Seite 329/330 XP000599747

## Beschreibung

Die Erfindung betrifft ein Seitenairbagmodul nach dem Oberbegriff des Anspruchs 1.

Es sind Seitenairbagmodule mit einem Gassack für den Kopf-Thorax-Bereich des Fahrzeuginsassen bekannt. Ein solches Modul ist u.a. in der nicht vorveröffentlichten EP-A-0 999 101 beschrieben. Diese Module sind vornehmlich seitlich in der Lehne des Sitzes angeordnet und breiten sich im Crashfall von dort in Richtung des Thorax und des Kopfes aus. Dabei besteht der Nachteil eines solchen kombinierten Kopf-Thorax-Airbags darin, daß der Kopfteil des Airbags das Bestreben hat, sich in der Entfaltungsphase aus dem Seitenfenster zu bewegen. Zu einer Entfaltung aus dem Seitenfenster hinaus kommt es tatsächlich, wenn dieses im Crashfall zerbricht. Dieser Vorgang wird noch dadurch unterstützt, daß sich die Seitenstruktur der meisten Kraftfahrzeuge nach oben zunehmend in Richtung der Fahrzeugmitte wölbt.

Zur Vermeidung dieses Nachteils ist es aus dem DE 295 17 951 U1 bekannt, daß der Gassack zumindest eine Raffnaht aufweist. Diese verbindet in vollständig aufgeblasenen Zustand des Gassacks Abschnitte desselben so miteinander, daß der Gassack zumindest im Bereich der Raffnaht eine gegenüber einem entsprechenden Gassack ohne Raffnaht stärker gekrümmte Form aufweist. Die Raffnaht ist auf der dem Insassen zugekehrten Seite des Gassacks vorgesehen, so daß diese Seite kürzer ist als die dem Insassen abgewandte Seite. Dadurch wird der Gassack im Kopfbereich beim Entfalten in Richtung des Insassen geneigt. Der Nachteil dieses Gassacks besteht darin, daß die Raffnaht einen zusätzlichen Nähvorgang erfordert, der zudem schwer automatisierbar ist.

Weiterhin ist aus der JP-A-05 238 247 ein aus plattenförmigen Teilen zusammengesetzter Gassack bekannt, bei dem eine Neigung des gefüllten Gassacks in Richtung des Kopfes des Insassen dadurch erreicht wird, daß der dem Insassen zugekehrte Abschnitt des Gassacks kürzer ist als der gegenüberliegende Abschnitt und daß im Gassack ein Fangband vorgesehen ist. Der Nachteil dieses Gassacks besteht darin, daß nicht nur mehrere zusätzliche Nähte sondern auch noch ein zusätzliches Teil in Form des Fangbandes vorgesehen sind, die die Herstellung des Gassacks verteuern und die Automatisierung der Herstellung weiter erschweren.

Der Erfindung liegt die Aufgabe zugrunde, bei einem Seitenairbagmodul den Gassack mit geringeren Aufwand so auszubilden, daß er sich bei der Entfaltung im Kopfbereich des Insassen in Richtung des Insassen neigt.

Erfindungsgemäß wird das gemäß den Merkmalen der Ansprüche 1 und 15 erreicht.

Bei einem Seitenairbagmodul mit einem Gassack für den Kopf-Thorax-Bereich des Fahrzeuginsassen, weist erfindungsgemäß ein dem Insassen abgewandter Abschnitt des Gassackes in Fahrzeug-z-Richtung eine größere Länge als ein dem Insassen zugewandter Abschnitt auf. Der längere Abschnitt ist quer zur Fahrzeug-z-Richtung zur Erreichung der Dekkungsgleichheit mit dem kürzeren Abschnitt in mindestens eine Falte gelegt, und beide Abschnitte sind zur Bildung des Gassacks am Rand miteinander verbunden.

Bei diesem Seitenairbagmodul sind also in der Form gleiche Abschnitte des Gassacks unterschiedlich lang. Der längere Abschnitt wird durch mindestens eine Falte auf die gleiche Länge wie der kürzere Abschnitt gebracht, so daß beide Abschnitte deckungsgleich sind. Ein solcher Faltvorgang ist automatisierbar. Anschließend werden diese Abschnitte am Rand miteinander verbunden, so daß der Gassack entsteht. Beim Aufblasen eines solchen Gassacks bleiben die Ränder der Abschnitte miteinander verbunden, d.h., daß die Faltung dort bestehen bleibt. Zur Mitte hin wird die Faltung aber zunehmend aufgehoben, so daß sich der längere Abschnitt dort stärker ausbreiten kann. Da dieser aber am Rand an der stärkeren Ausbreitung gehindert wird, wölbt er sich, wodurch der Gassack im Kopfbereich in Richtung des Fahrzeuginsassen geneigt wird.

In einer ersten Ausführungsform bestehen die dem Insassen zugewandten und abgewandten Abschnitte aus mindestens je einem plattenförmigen Teil. Der Gassack ist also bei dieser Ausführungsform aus mehreren Teilen zusammengesetzt.

In einer zweiten Ausführungsform sind die Abschnitte unterschiedlicher Länge beidseitig der Knicklinie eines einteiligen Gassackzuschnittes vorgesehen. In dieser Ausführungsform besteht der Gassack aus einem Materialstück.

Die quer verlaufende Falte im längeren Abschnitt kann sowohl horizontal als auch schräg verlaufen, wodurch die Verdrehrichtung des Gassacks beeinflußt wird.

Die Winkellage des sich entfaltenden Gassacks kann auch dadurch beeinflußt werden, daß der Gassack aus verschiedenen Abschnitten besteht, die unter einem bestimmten Winkelversatz miteinander verbunden sind.

Ein für das Aufblasen des Gassackes erforderlicher Gasgenerator ist zweckmäßig an einem Einblasmund am längeren Abschnitt unterhalb der Falte angeordnet. In diesem Fall kann durch unterschiedliche Faltrichtungen das Entfaltungsverhalten des Gassackes beeinflußt werden. Wenn der längere Abschnitt außen vom Gasgenerator weg oder innen zum Gasgenerator hin gefaltet ist, dann verfängt sich der aus dem Gasgenerator austretende Gasstrahl in der Gewebefalte, wodurch die Wölbung des längeren Abschnitts zeitlich verkürzt wird. Wenn der längere Abschnitt außen zum Gasgenerator hin oder innen vom Gasgenerator weg gefaltet wird, strömt das Gas über die Falte und die Wölbung des Gassackes wird zeitlich verzögert.

In einer weiteren Ausgestaltung ist vorgesehen, daß die Gassackabschnitte im Zuschnitt C-förmig sind und zu einem C-förmigen Gassack verbunden sind und daß der Gassack im Kraftfahrzeug so eingebaut ist, daß er in der Seitenansicht C-förmig verläuft und der Freiraum der C-Form im Bereich der Schulter des Insassen liegt. Dieser Gassack weist auch nach der Entfaltung eine C-Form auf. Durch den Freiraum im Schulterbereich wird verhindert, daß der Gassack durch die Schulter nach außen gedrückt wird. Die Neigung des Kopfteils des Gassacks in Richtung des Insassen wird somit zusätzlich unterstützt.

Mindestens ein waagerechter Abschnitt des C-förmigen Gassacks ist im Ruhezustand des Gassacks nach innen eingestülpt. Dadurch ergibt sich der zusäzliche Vorteil, daß die zeitliche Abfolge der Gassackentfaltung verbessert wird und ermöglicht weiterhin eine gerichtete Entfaltung, die eine Relativbewegung zwischen Insassen und Gassack verhindert.

Es ist weiterhin zweckmäßig, daß der Gassack im Ruhezustand von dem für den Kopf-Bereich des Insassen bestimmten Abschnitt ausgehend eingerollt ist und im unteren Abschnitt in Richtung des Einblasmundes gerafft ist. Dabei befindet sich die Rolle zweckmäßig auf der dem Insassen- zugekehrten Seite des Gassacks.

Die Verbindung der Ränder der Abschnitte unterschiedlicher Länge zur Bildung des Gassacks erfolgt vorzugsweise durch Nähen.

Ein Seitenairbagmodul mit einem Gassack für den Kopf-Thorax-Bereich des Fahrzeuginsassen, der sich beim Aufblasen in Richtung des Kopfes des Fahrzeuginsassen neigt, kann erfindungsgemäß auch dadurch erzielt werden, daß der Gassack aus Teilen zusammengesetzt ist, die sich beim Aufblasen des Gassacks unterschiedlich dehnen, wobei mindestens ein dem Insassen zugekehrter Teil des Gassacks eine geringere Dehnbarkeit als mindestens ein dem Insassen abgekehrter Teil des Gassacks aufweist. Die unterschiedliche Dehnbarkeit kann dadurch erzielt werden, daß die Teile aus Material unterschiedlicher Dehnbarkeit und/oder aus einer unterschiedlichen Anzahl Gewebelagen bestehen.

Die Erfindung soll in Ausführungsbeispielen anhand von Zeichnungen erläutert werden. Es zeigen:
- Fig. 1a bis d: Gassackplatten in zwei unterschiedlichen Stadien vor dem Vernähen;
- Fig. 2: einen aus den Platten nach den Figuren 1a - e zusammengesetzten Gassack;
- Fig. 3: einen Gassack nach Fig. 2 in aufgeblasener Form;
- Fig. 4: einen teilweise aufgeblasenen Gassack mit einer nach oben gefalteten äußeren Gassackplatte;
- Fig. 5: einen teilweise aufgeblasenen Gassack mit einer nach unten gefalteten äußeren Gassackplatte;
- Fig. 6: einen Gassack mit einer schräg verlaufenden Falte in der äußeren Gassackplatte;
- Fig. 7a bis e: einen Gassack mit C-förmigem Zuschnitt in unterschiedlichen Stadien der Faltung;
- Fig. 8: einen in einem Kraftfahrzeug angebrachten Gassack nach den Figuren 7a bis e in der Vorderansicht;
- Fig. 9: den Gassack nach Fig. 8 in der Seitenansicht;
- Fig. 10: die Vorderansicht eines Gassacks, der aus verschiedenen Abschnitten besteht, die unter einem Winkelversatz miteinander verbunden sind;
- Fig. 11: eine Seitenansicht des Ausführungsbeipiels nach Fig. 10;
- Fig. 12: die Vorderansicht eines weiteren Gassacks, der aus winkelversetzten Teilen besteht;
- Fig. 13: eine Seitenansicht des Ausführungsbeispiels nach Fig. 12.

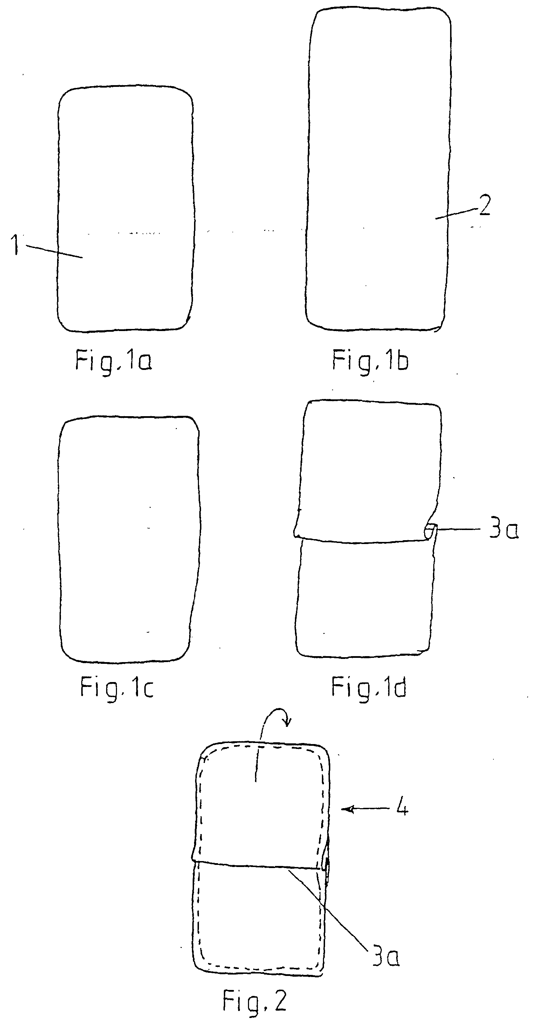

In der Fig. 1a ist eine innere Gassackplatte 1 dargestellt, die mit einer äußeren Gassackplatte 2 (Fig. 1b) zu einem Gassack vernäht werden soll. Diese äußere Gassackplatte 2 weist die gleiche Breite wie die innere Gassackplatte 1, aber eine größere Länge auf. Vor dem Vernähen beider Platten wird die äußere Gassackplatte durch Einlegen einer Falte 3a so verkürzt, daß sie die gleiche Länge wie die innere Gassackplatte aufweist und daß damit beide Gassackplatten deckungsgleich sind. Danach werden beide Platten am Rand miteinander vernäht, so daß der in Fig. 2 dargestellte Gassack 4 entsteht.

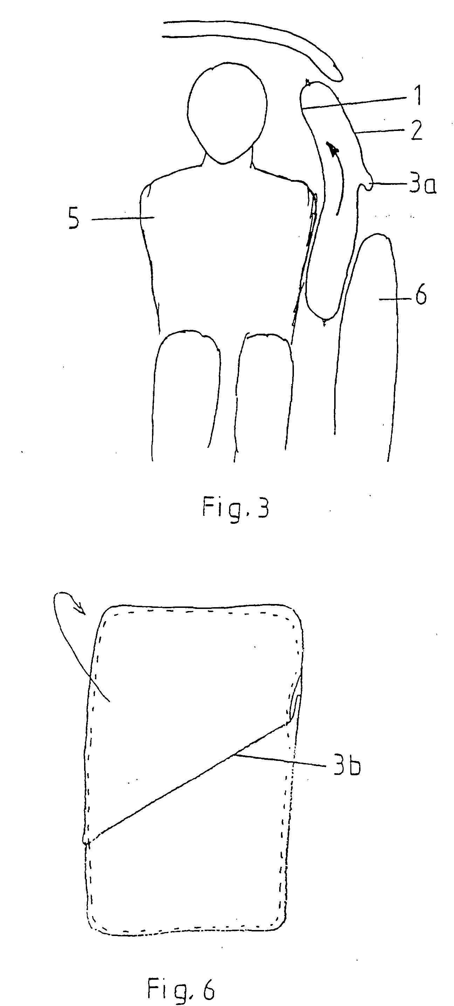

Wie in Fig. 3 dargestellt ist, ist der Gassack im Kraftfahrzeug so eingebaut, daß die innere Gassackplatte 1 dem Insassen 5 zugewandt ist und daß die äußere Gassackplatte 2 mit der quer liegenden Falte 3a der Kraftfahrzeugtür 6 oder Seitenwand zugewandt ist. Während des Aufblasens wird die innere Gassackplatte 1 zuerst gestreckt. Die äußere Gassackplatte kann sich am Rand ebenfalls nur bis zur Größe der inneren Gassackplatte ausdehnen, da die Platten dort vernäht sind, d.h., die Falte 3a bleibt dort erhalten. Zur Mitte hin entfaltet sich die äußere Gassackplatte 2 dagegen zunehmend, so daß sich diese in diesem Bereich nach außen wölbt. Da aber die innere Gassackplatte bereits voll gestreckt ist und außen mehr Gewebe zur Verfügung steht, neigt sich der Gassack insgesamt in Richtung des Insassen.

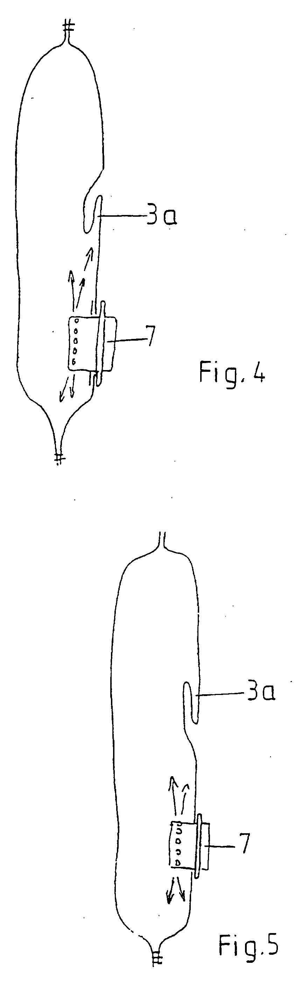

In den Figuren 4 und 5 sind unterschiedliche Ausrichtungen der Falte 3a dargestellt. In der Fig. 4 ist die äußere Gassackplatte 2 außen nach oben gefaltet, d.h., von einem im unteren Abschnitt der äußeren Gassackplatte 2 angeordneten Gasgenerator 7 weg gefaltet. Dadurch kann sich der aus diesem nach dessen Zündung austretende Gasstrahl in der Falte 3a verfangen und unterstützt zusätzlich die Krümmung des Gassackes. In der Fig. 5 ist die äußere Gassackplatte dagegen außen nach unten gefaltet, d.h. in Richtung des Gasgenerators 7. In diesem Fall strömt das Gas über die Falte 3a hinweg, wodurch sich diese zeitlich verzögert streckt. Damit erfolgt auch die Neigung des Gassackes gegenüber der Fig 4 zeitlich verzögert.

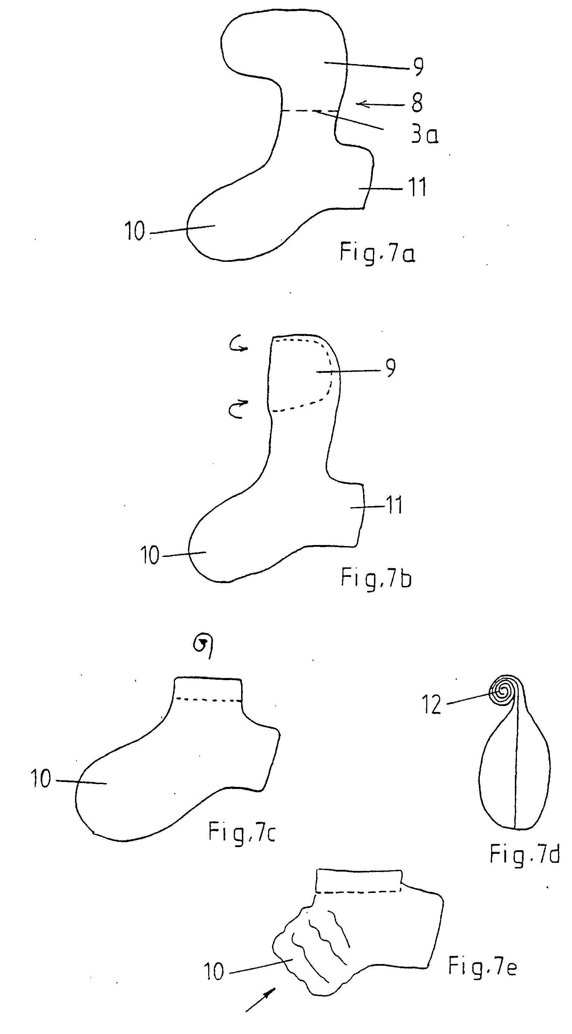

Durch die Winkellage der Falte wird die Verdrehrichtung des Gassacks bei dessen Entfaltung beeinflußt. Wenn die Falte 3a, wie in Fig. 2 dargestellt, senkrecht zu den Längsseiten des Gassacks verläuft, neigt sich der Gassack bei seiner Entfaltung über die gesamte Breite gleichmäßig in Richtung des Insassen. Verläuft dagegen die Falte 3b schräg bezüglich der Längsseiten des Gassacks, wie es in Fig. 6 dargestellt ist, neigt er sich von der rechten zur linken Seite, d.h. mit schräg nach unten verlaufender Falte, zunehmend stärker. Der Gassack wird bei seiner Entfaltung somit verdreht, wie es durch den Pfeil in Fig. 6 angedeutet ist.

Bei dem in den Figuren 7 a bis e dargestellten Gassack 8, der in der Seitenansicht eine C-Form aufweist, ist eine der Möglichkeiten zur Faltung des Gassacks dargestellt. In der ausgebreiteten Lage des Gassacks der Fig. 7a ist die Falte 3a schematisch dargestellt. Der Gassack weist ein Kopfteil 9 und ein Thoraxteil 10 auf, in dessen Bereich ein Einblasmund 11 vorgesehen ist. Um den Gassack im nicht dargestellten Airbaggehäuse verstauen zu können, wird zunächst das Kopfteil 9 nach innen eingestülpt (Fig. 7b). Anschließend wird das Kopfteil bis zum Einblasmund 11 eingerollt. Dabei befindet sich die Rolle 12 auf der dem Insassen zugewandten Seite (Figuren 7c und d). Anschließend wird das Thoraxteil 10 in Richtung des Einblasmundes 11 gerafft und das so gefaltete Gassackpaket im Airbaggehäuse verstaut.

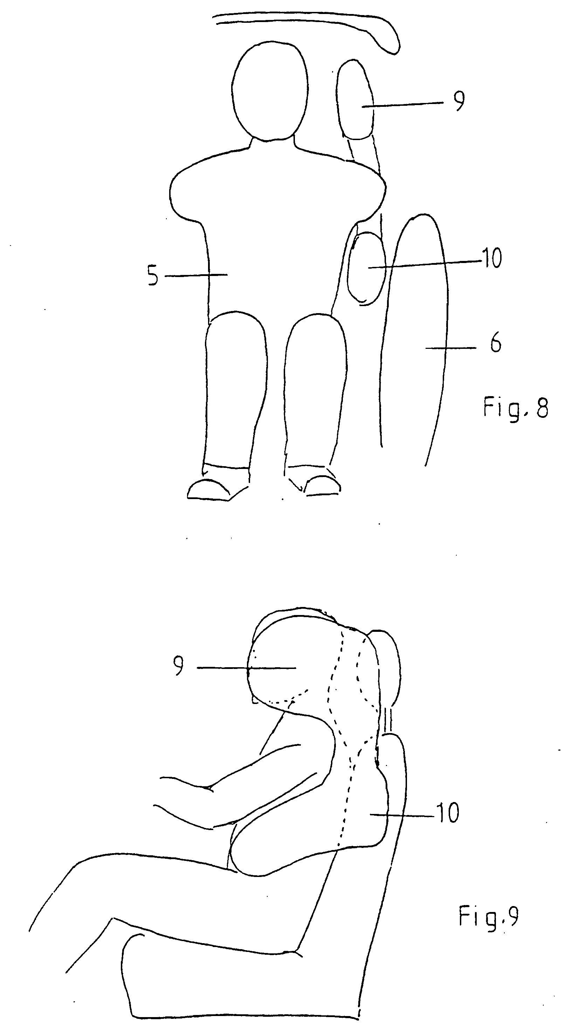

Aus der Vorderansicht der Fig. 8 ist erkennbar, daß in der Ausführungsform des Gassackes nach den Figuren 7a bis e der Schulterbereich vom Gassack nicht bedeckt wird, so daß sich das Kopfteil 9 ohne Behinderung durch die Schulter in Richtung des Kopfes des Insassen neigen kann. In der Fig. 9 ist die Anordnung der Fig. 8 in der Seitenansicht dargestellt. Daraus ist erkennbar, daß auch die Arme im Bereich des Freiraumes des Gassacks 8 liegen und somit die Neigung des Kopfteils in Richtung Insassen ebenfalls nicht behindern können.

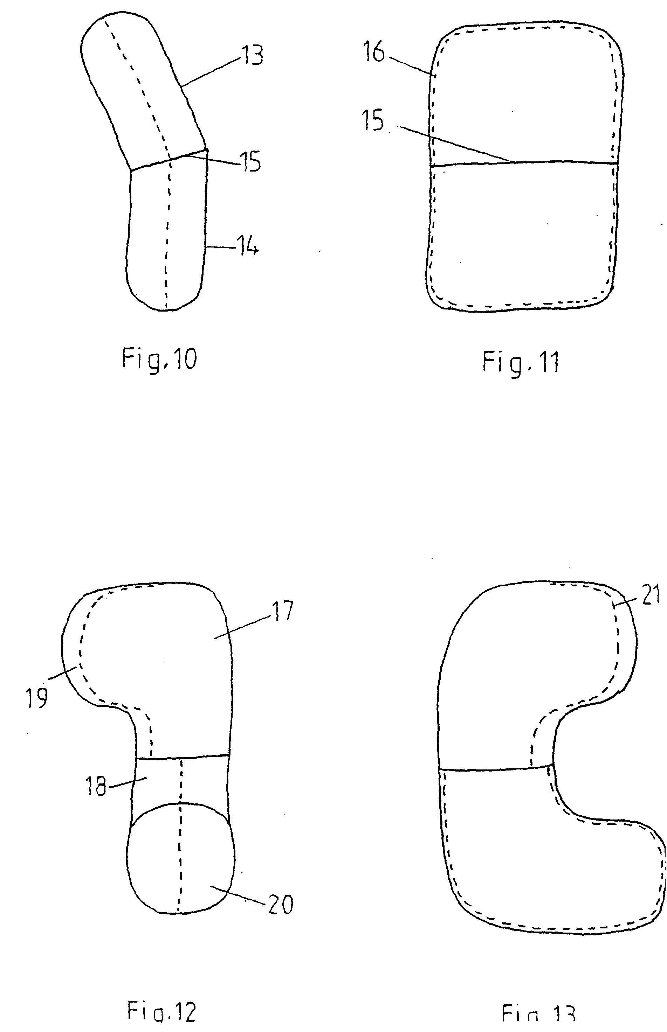

Der in Fig. 10 dargestellte aufgeblasene Gassack besteht aus einem Kopfteil 13 und einem Thoraxteil 14, deren Verbindungsnaht 15 so verläuft, daß die beiden genannten Teile unter dem dargestellten Winkelversatz zueinander verlaufen. Die aus innerer und äußerer Gassackplatte bestehenden Teile sind durch eine Umfangsnaht 16 miteinander verbunden, wie aus Fig. 11 ersichtlich ist.

Bei dem in Fig. 12 dargestellten Gassack sind ein Kopfteil 17 und ein Thoraxteil 18 so unter einem Winkelversatz angeordnet, daß das Kopf- gegenüber dem Thoraxteil verdreht ist. Dabei weisen das Ende 19 des Kopfteils und das Ende 20 in unterschiedliche Richtungen. Wie aus der Fig. 13 erkennbar ist, sind die aus innerer und äußerer Gassackplatte bestehenden Teile wieder durch eine Umfangsnaht 21 miteinander verbunden.

## Patentansprüche

1. Seitenairbagmodul mit einem Gassack für den Kopf-Thorax-Bereich des Fahrzeuginsassen, wobei der Gassack aus zwei Abschnitten besteht, die am Rand miteinander verbunden sind,
**dadurch gekennzeichnet,**
**daß** ein dem Insassen (5) abgewandter Abschnitt (2) des Gassackes (4) in Fahrzeug-z-Richtung eine größere Länge als ein dem Insassen zugewandter Abschnitt (1) aufweist, daß der längere Abschnitt (2) quer zur Fahrzeug-z-Richtung zur Erreichung der Deckungsgleichheit mit dem kürzeren Abschnitt (1) in mindestens eine Falte (3a, 3b) gelegt ist.

2. Seitenairbagmodul nach Anspruch 1, **dadurch gekennzeichnet, daß** der dem Insassen zugewandte und abgewandte Abschnitt aus mindestens je einem plattenförmigen Teil (1, 2) bestehen.

3. Seitenairbagmodul nach Anspruch 1, **dadurch gekennzeichnet, daß** die Abschnitte unterschiedlicher Länge beidseitig der Knicklinie eines einteiligen Gassackzuschnittes vorgesehen sind.

4. Seitenairbagmodul nach mindestens einem der vorhergehenden Ansprüche, **dadurch gekennzeichnet, daß** mindestens eine horizontal verlaufende Falte (3a) im längeren Abschnitt (2) vorgesehen ist.

5. Seitenairbagmodul nach mindestens einem der vorhergehenden Ansprüche, **dadurch gekennzeichnet, daß** mindestens eine schräg verlaufende Falte (3b) im längeren Abschnitt (2) vorgesehen ist.

6. Seitenairbagmodul nach mindestens einem der vorhergehenden Ansprüche, **dadurch gekennzeichnet, daß** der Gassack aus verschiedenen Abschnitten (13, 14; 17, 18) besteht, die unter einem bestimmten Winkelversatz miteinander verbunden sind.

7. Seitenairbagmodul nach mindestens einem der vorhergehenden Ansprüche, **dadurch gekennzeichnet, daß** ein Gasgenerator (7) an einem Einblasmund (11) am längeren Abschnitt (2) unterhalb der Falte (3a, b) angeordnet ist.

8. Seitenairbagmodul nach mindestens einem der vorhergehenden Ansprüche, **dadurch gekennzeichnet, daß** der längere Abschnitt (2) außen vom Gasgenerator (7) weg oder innen zum Gasgenerator (7) hin gefaltet ist.

9. Seitenairbagmodul nach mindestens einem der vorhergehenden Ansprüche, **dadurch gekennzeichnet, daß** der längere Abschnitt (2) außen zum Gasgenerator (7) hin oder innen vom Gasgenerator (7) weg gefaltet ist.

10. Seitenairbagmodul nach mindestens einem der vorhergehenden Ansprüche, **dadurch gekennzeichnet, daß** die Gassackteile im Zuschnitt C-förmig sind und zu einem C-förmigen Gassack (8) verbunden sind, und daß der Gassack (8) im Kraftfahrzeug so eingebaut ist, daß er in der Seitenansicht C-förmig verläuft und der Freiraum der C-Form im Bereich der Schulter des Insassen liegt.

11. Seitenairbagmodul nach Anspruch 10, **dadurch gekennzeichnet, daß** mindestens ein waagerechter Abschnitt (9) des C-förmigen Gassacks (8) im Ruhezustand des Gassacks nach innen eingestülpt sind.

12. Seitenairbagmodul nach mindestens einem der vorhergehenden Ansprüche, **dadurch gekennzeichnet, daß** der Gassack (8) im Ruhezustand von dem für den Kopf-Bereich des Insassen bestimmten Abschnitt (9) ausgehend eingerollt ist und im unteren Abschnitt (10) in Richtung des Einblasmundes (11) gerafft ist.

13. Seitenairbagmodul nach Anspruch 12, **dadurch gekennzeichnet, daß** sich die Rolle (12) auf der dem Insassen (5) zugekehrten Seite des Gassacks befindet.

14. Seitenairbagmodul nach mindestens einem der vorhergehenden Ansprüche, **dadurch gekennzeichnet, daß** die Abschnitte (1, 2) unterschiedlicher Länge zur Bildung des Gassacks durch Nähen miteinander verbunden sind.

15. Seitenairbagmodul mit einem Gassack für den Kopf-Thorax-Bereich des Fahrzeuginsassen, wobei der Gassack aus plattenförmigen Teilen zusammengesetzt ist, **dadurch gekennzeichnet, daß** der Gassack aus Teilen zusammengesetzt ist, die sich beim Aufblasen des Gassacks unterschiedlich dehnen, wobei mindestens ein dem Insassen zugekehrtes Teil des Gassacks eine geringere Dehnbarkeit als mindestens ein dem Insassen abgekehrtes Teil des Gassacks aufweist.

16. Seitenairbagmodul nach Anspruch 15, **dadurch gekennzeichnet, daß** die Teile aus Material unterschiedlicher Dehnbarkeit und/oder aus einer unterschiedlichen Anzahl Gewebelagen bestehen.

## Claims

1. Side airbag module with a gas bag for the head and thorax area of the vehicle occupant wherein the gas bag comprises two sections which are joined with one another at the edge,
**characterised in that**
a section (2-) of the gas bag (4) facing away from the occupant (5) has in the z-direction of the vehicle a greater length than a section (1) facing the occupant, that the longer section (2) is placed into at least one fold (3a, b) perpendicular to the z-direction of the vehicle to register with the shorter section (1).

2. Side airbag module according to claim 1 **characterised in that** the section facing the occupant and the section facing away from the occupant each consist of a panel-like part (1,2).

3. Side airbag module according to claim 1 **characterised in that** the sections of different length are provided either side of the bending line of a one-piece gas bag blank.

4. Side airbag module according to at least one of the preceding claims, **characterised in that** at least one horizontally aligned fold (3a) is provided in the longer section (2).

5. Side airbag module according to at least one of the preceding claims **characterised in that** at least one inclined fold (3b) is provided in the longer section (2).

6. Side airbag module according to at least one of the preceding claims **characterised in that** the gas bag consists of different sections (13, 14; 17, 18) which are connected together with a certain angular stagger.

7. Side airbag module according to at least one of the preceding claims **characterised in that** a gas generator (7) is mounted at a blow-in mouth (11) on the longer section (2) underneath the fold (3a, b).

8. Side airbag module according to at least one of the preceding claims **characterised in that** the longer section (2) is folded on the outside away from the gas generator (7) or on the inside towards the gas generator (7).

9. Side airbag module accordion to at least one of the preceding claims **characterised in that** the longer section (2) is folded on the outside towards the gas generator (7) or on the inside away from the gas generator (7).

10. Side airbag module according to at least one of the preceding claims **characterised in that** the gas bag parts are C-shaped in the blank section and are connected into a C-shaped gas bag (8), and that the gas bag (8) is installed in the motor vehicle so that it runs C-shaped in side view and the clearance of the C-shape lies in the area of the shoulders of the occupant.

11. Side airbag according to claim 10 **characterised in that** at least one horizontal section (9) of the C-shaped gas bag (8) is inverted inwards in the rest state of the gas bag.

12. Side airbag module according to at least one of the preceding claims **characterised in that** the gas bag (8) in the rest state is rolled in starting from the section (9) intended for the head area of the occupant and in the lower section (10) is gathered in towards the inflation mouth.

13. Side airbag module according to claim 12 **characterised in that** the roll (12) is located on the side of the gas bag facing the occupant (5).

14. Side airbag module according to at least one of the preceding claims **characterised in that** the sections (1, 2) of different length are connected together by stitching to form the gas bag.

15. Side airbag module with a gas bag for the head and thorax area of the vehicle occupant whereby the gas bag is comprised of panel like parts **characterised in that** the gas bag is comprised of parts which during inflation of the gas bag extend differently, whereby at least one part of the gas bag facing the occupant has a lower degree of extension than at least one part of the gas bag facing away from the occupant.

16. Side airbag module according to claim 15 **characterised in that** the parts consist of materials which extend to different degrees and/or of a different number of fabric layers.

## Revendications

1. Module d'airbag latéral comprenant un sac à gaz pour la région de la tête et du thorax du passager d'un véhicule, dans lequel le sac à gaz comprend deux tronçons reliés au bord l'un à l'autre,
**caractérisé en ce que**
un tronçon (2) du sac à gaz (4) détourné du passager (5) présente dans la direction z du véhicule une longueur plus importante qu'un tronçon (1) tourné vers le passager, et en ce que le tronçon plus long (2) est posé dans au moins un pli (3a, 3b) perpendiculairement à la direction z du véhicule afin d'atteindre une égalité de couverture avec le tronçon plus court (1).

2. Module d'airbag latéral selon la revendication 1, **caractérisé en ce que** le tronçon tourné vers le passager et le tronçon détourné du passager sont constitués chacun par au moins une partie en forme de plaque (1, 2).

3. Module d'airbag latéral selon la revendication 1, **caractérisé en ce que** les tronçons de longueurs différentes sont prévus des deux côtés de la ligne de pliage d'un flan d'une seule pièce pour le sac à gaz.

4. Module d'airbag latéral selon l'une au moins des revendications précédentes, **caractérisé en ce qu'**il est prévu au moins un pli (3a) s'étendant horizontalement dans le tronçon plus long (2).

5. Module d'airbag latéral selon l'une au moins des revendications précédentes, **caractérisé en ce qu'**il est prévu au moins un pli (3b) s'étendant en oblique dans le tronçon plus long (2).

6. Module d'airbag latéral selon l'une au moins des revendications précédentes, **caractérisé en ce que** le sac à gaz est constitué de différents tronçons (13, 14 ; 17, 18) qui sont reliés les uns aux autres avec un décalage angulaire déterminé.

7. Module d'airbag latéral selon l'une au moins des revendications précédentes, **caractérisé en ce qu'**un générateur de gaz (7) est agencé au-dessous du pli (3a, b) au niveau d'une embouchure d'insufflation (11) sur le tronçon plus long (2).

8. Module d'airbag latéral selon l'une au moins des revendications précédentes, **caractérisé en ce que** le tronçon plus long (2) est plié vers l'extérieur en éloignement du générateur de gaz (7), ou vers l'intérieur en direction du générateur de gaz (7).

9. Module d'airbag latéral selon l'une au moins des revendications précédentes, **caractérisé en ce que** le tronçon plus long (2) est plié vers l'extérieur en direction du générateur de gaz (7), ou vers l'intérieur en éloignement du générateur de gaz (7).

10. Module d'airbag latéral selon l'une au moins des revendications précédentes, **caractérisé en ce que** les parties du sac à gaz présentent dans le flan une forme en C, et en ce qu'ils sont reliés pour former un sac à gaz (8) en forme de C, en ce que le sac à gaz (8) est ainsi monté dans le véhicule qu'il s'étend en vue latérale en forme de C, et en ce que l'espace libre de la forme en C est disposé dans la région des épaules du passager.

11. Module d'airbag latéral selon la revendication 10, **caractérisé en ce qu'**un tronçon horizontal (9) du sac à gaz (8) en forme de C au moins est rabattu vers l'intérieur dans la condition de repos du sac à gaz.

12. Module d'airbag latéral selon l'une au moins des revendications précédentes, **caractérisé en ce que** le sac à gaz (8) est enroulé dans la condition de repos en partant du tronçon (9) destiné à la région du corps du passager, et en ce qu'il est drapé en direction de l'embouchure d'insufflation (11) dans le tronçon inférieur (10).

13. Module d'airbag latéral selon la revendication 12, **caractérisé en ce que** le rouleau (12) se trouve sur le côté du sac à gaz tourné vers le passager (5).

14. Module d'airbag latéral selon l'une au moins des revendications précédentes, **caractérisé en ce que** les tronçons (1, 2) de longueurs différentes sont reliés l'un à l'autre par couture pour former le sac à gaz.

15. Module d'airbag latéral comprenant un sac à gaz pour la région de la tête et du thorax du passager d'un véhicule, le sac à gaz étant composé de parties en forme de plaques, **caractérisé en ce que** le sac à gaz est composé de parties qui s'allongent de façon différente lors du gonflage du sac à gaz, et dans lequel au moins une partie du sac à gaz tournée vers le passager présente une extensibilité plus faible qu'au moins une partie du sac à gaz détournée du passager.

16. Module d'airbag latéral selon la revendication 15, **caractérisé en ce que** les parties sont formées en un matériau d'extensibilité différente et/ou en un nombre différent de couches textiles.
